# EUROPEAN PATENT APPLICATION

(11) **EP 4 718 905 A1**
(43) Date of publication of application: **01.04.2026**
(21) Application number: 25185405.5
(22) Date of filing: 26.06.2025
(51) Int. Cl.: H04W 24/02

(54) **OPEN-LOOP EXECUTION OF RADIO ACCESS NETWORK INTELLIGENT CONTROLLER APPLICATIONS**

(30) Priority: 30.09.2024 US 202463701258 P; 20.12.2024 US 202418990838
(71) Applicant: Juniper Networks, Inc., Sunnyvale, CA 94089-1206 (US)
(72) Inventor: SAHIN, Burcu, Sunnyvale, 94089 (US); NESTEROFF, Lyubov, Sunnyvale, 94089 (US); AKMAN, Arda, Sunnyvale, 94089 (US); BULUT, Ozgur, Sunnyvale, 94089 (US); MIZRAHI, Bengi, Sunnyvale, 94089 (US)
(74) Representative: D Young & Co LLP

(57) **Abstract**

An example Radio Access Network Intelligent Controller (RIC) for a radio access network (RAN) is described. The RIC includes processor circuitry and memory coupled to the processor circuitry. The memory stores instructions, when executed, to cause the processor circuitry to execute one or more applications configured to determine one or more changes to make to the RAN in an open-loop mode. In the open-loop mode, the one or more applications are unable to automatically make the one or more changes to make to the RAN. The instructions also cause the processor circuitry to control a user interface (UI) to present data indicative of the one or more changes to make to the RAN for display to a user.

## Description

This application claims the benefit of US Patent Application No. 18/990,838, filed 20 December 2024 and of US Provisional Patent Application No. 63/701,258, filed 30 September 2024, the entire content of each application is incorporated herein by reference.

### TECHNICAL FIELD

The disclosure relates to computer networking and, more specifically, to executing Open Radio Access Network (O-RAN) applications of functions and services within a framework of a radio access network (RAN) intelligent controller (RIC).

### BACKGROUND

Computer networks have become ubiquitous, and the number of network applications, network-connected devices, and types of network-connected devices are rapidly expanding. Such devices now include computers, smartphones, Internet-of-Things (IoT) devices, vehicles, medical devices factory equipment, etc. 5G mobile network architectures enhanced the ability to provide communication services using cloud-based network function virtualization (NFV). Specialized networks can be created using the Radio Access Network (RAN) of a mobile network operator combined with functions of a 5G core. For example, networks can be created for a specific service level agreement (SLA), special use cases, or other specific requirements. Examples of such networks include private mobile networks, industrial networks, a dedicated network for connected vehicles, etc.

### SUMMARY

Particular aspects are set out in the appended independent claims. Various optional embodiments are set out in the dependent claims. In general, this disclosure describes techniques for running, in an open-loop mode, one or more applications, such as rApps of a mobile network. A network system may include one or more RAN Intelligent Controllers (RIC) for a RAN of a mobile network. For example, the network system may include a Service Management and Orchestration (SMO) framework offering various framework functions, such as orchestrating and controlling management and automation aspects of a RAN, along with a non-real-time (non-RT) RIC, configured in accordance with Open Radio Access Network (O-RAN) standards (the network system being referred to hereinafter as or as implementing an "O-RAN architecture"), to manage and/or monitor aspects of a RAN. The O-RAN architecture may include a non-RT RIC and a near-real-time RIC (near-RT RIC) that each executes different functions and services for RAN functions. For example, the non-RT RIC is an orchestration and automation function configured to provide radio resource management, higher layer procedure optimization, policy optimization, and provide guidance, parameters, policies and AI/ML models to support the operation of near-RT RIC functions in the RAN. The non-RT RIC may onboard one or more applications (e.g., rApps) that provide non-real time (e.g., greater than one second) control of RAN elements and their resources, and the near-RT RIC may onboard one or more applications (e.g., xApps) that provide near-real time control of RAN elements and their resources.

Currently, an O-RAN enables modular applications to perform fast and automated, closed-loop optimizations on a RAN. Such applications may include any one or more of an rApp, xApp, cApp (Core Network related application), or tApp (Transport Network related application), alternatively referred to as "RIC applications." When operating in a closed-loop manner, an application may obtain information, determine to perform an action (e.g., make a change to the RAN) based on the obtained information, and act on its own to perform that action. However, some operators may desire to be able to run one or more rApps in an open-loop manner, such that any changes to the RAN would not be made automatically, but would need to be applied by a user. For example, when operating in an open-loop manner, an application may obtain information, determine to perform an action (e.g., make a change to the RAN) based on the obtained information, and the RIC stores information relating to the action that the application determined to perform, but the RIC does not automatically perform that action. In some examples, when operating in an open-loop mode, the application is unable to or otherwise refrains from automatically taking the action. Rather, a user may be required to provide input to perform the action.

In some examples, an operator may desire to run an application in an open-loop manner to test the application, to gain confidence in the changes the application is attempting to implement within the RAN, or for other reasons. In some examples, after running the application in an open-loop mode for some period of time, an operator may switch from operating the application in the open-loop mode to a closed-loop mode.

According to the techniques of this disclosure, a RIC, such as a non-RT RIC may be configured to operate one or more application in an open-loop mode. In an open-loop mode, an application may be unable to automatically make changes to the RAN.

The techniques described herein may provide one or more technical advantages that realize at least one practical application. For example, the techniques of this disclosure may provide for the ability of an operator to test an application operating a real operation environment on real data to determine that the application is making appropriate decisions regarding operations of an O-RAN network, prior to actually permitting the application to control such operations. As such, the techniques of this disclosure may reduce a chance that an application may cause problems within the O-RAN network that may lead to decreased network throughput, dropped calls, lower quality connections, or network failure.

In one example, a Radio Access Network Intelligent Controller (RIC) for a radio access network (RAN) includes processor circuitry; and one or more memories coupled to the processor circuitry, the one or more memories storing instructions, when executed, to cause the processor circuitry to: execute one or more applications configured to determine one or more changes to make to the RAN in an open-loop mode, wherein, in the open-loop mode, the one or more applications are unable to automatically make the one or more changes to make to the RAN; and control a user interface (UI) to present data indicative of the one or more changes to make to the RAN for display to a user.

In another example, a method includes: executing, by processor circuitry of a Radio Access Network Intelligent Controller (RIC), one or more applications configured to determine one or more changes to make to a radio access network (RAN) in an open-loop mode, wherein, in the open-loop mode, the one or more applications are unable to automatically make the one or more changes to make to the RAN; and controlling, by the processor circuitry, a user interface (UI) to present data indicative of the one or more changes to make to the RAN for display to a user.

In another example, computer-readable media encodes instructions that, when executed, cause processor circuitry of a Radio Access Network Intelligent Controller (RIC) to: execute one or more applications configured to determine one or more changes to make to the RAN in an open-loop mode, wherein, in the open-loop mode, the one or more applications are unable to automatically make the one or more changes to make to the RAN; and control a user interface (UI) to present data indicative of the one or more changes to make to the RAN for display to a user..

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example network system configured to provide for open-loop operation of rApps according to one or more aspects of the disclosure.
FIG. 2 is a block diagram illustrating further example details of the Non-RT RIC of the Service Management and Orchestration of FIG. 1.
FIG. 3 is a block diagram illustrating an example computing system in accordance with one or more aspects of this disclosure.
FIG. 4 is a flow diagram illustrating example data management and exposure (DME) services techniques.
FIG. 5 is a flow diagram illustrating example A1 policy management services techniques.
FIG. 6 is a flow diagram illustrating example RAN OAM configuration management services techniques.
FIG. 7 is a conceptual diagram illustrating example RIC user interfaces.
FIG. 8 is a flow diagram illustrating example DME-based open-loop execution for rApps techniques according to one or more aspects of this disclosure.
FIG. 9 is a conceptual diagram illustrating an example GUI according to one or more aspects of this disclosure.
FIG. 10 is a conceptual diagram illustrating another example GUI according to one or more aspects of this disclosure.
FIG. 11 is a conceptual diagram illustrating yet another example GUI according to one or more aspects of this disclosure.
FIG. 12 is a flow diagram illustrating example interception-based open-loop execution for RIC applications techniques according to one or more aspects of this disclosure.
FIG. 13 is a flow diagram illustrating example open-loop executing techniques of a RIC application according to one or more aspects of this disclosure.

Like reference characters refer to like elements throughout the text and figures.

### DETAILED DESCRIPTION

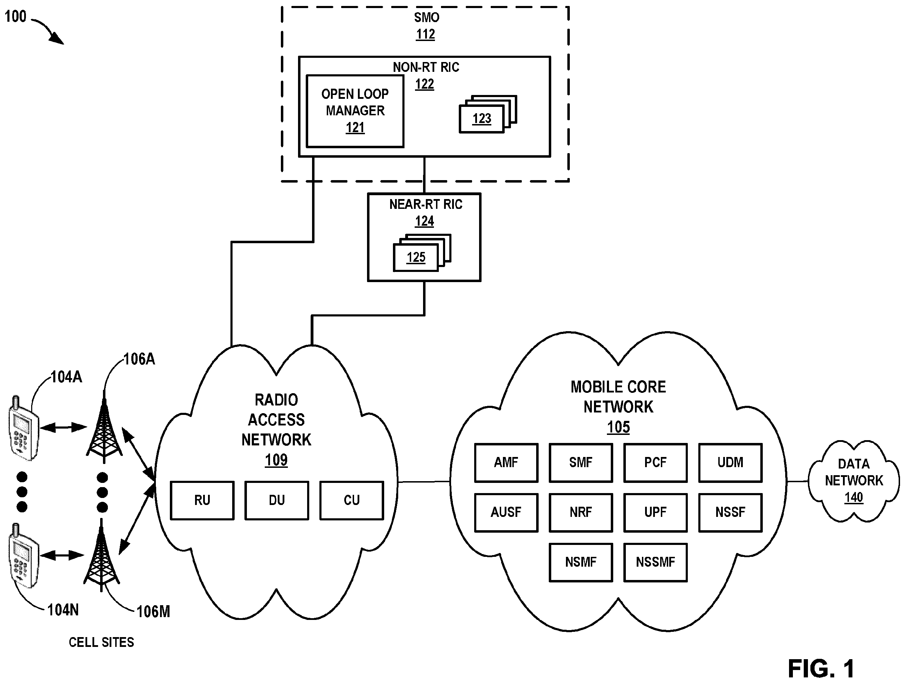

FIG. 1 is a block diagram illustrating an example network system configured to provide for open-loop operation of rApps according to one or more aspects of the disclosure. In the example illustrated in FIG. 1, network system 100 includes Service and Management Orchestrator (SMO) 112, non-RT RIC 122, near-RT RIC 124, one or more radio access networks (RANs), e.g., RAN 109, and mobile core network (or simply "core") 105 that provide user equipment 104A-104N (collectively, "UEs 104") with access to one or more applications or services provided by data network 140. In the example of FIG. 1, non-RT RIC 122 includes open-loop manager 121.

UEs 104 may represent smartphones, desktop computers, laptop computers, tablets, smart watches, and/or "Internet-of-Things" (IOT) devices, such as cameras, sensors, televisions, appliances, or the like. As shown in FIG. 1, network system 100 includes RAN 109 that provides network access, data transport, and other services to UEs 104. In some examples, RAN 109 may be an Open Radio Access Network (O-RAN), a 5G mobile network RAN, a 4G LTE mobile network RAN, another type of RAN, or a combination of the above. For example, in a 5G-radio access network, RAN 109 comprises a plurality of cell sites (or simply "cells") that each include radio equipment, such as base stations 106A-106M (collectively, "base stations 106"), which may also be referred to as gNodeBs, to exchange packetized data within a data network to ultimately access one or more applications or services provided by data network 140. While represented in FIG. 1 as towers, each of base stations 106 is divided into three functional components: radio unit (RU), distributed unit (DU), and central unit (CU), which can be deployed in various configurations. RU manages the radio frequency layer and has antenna arrays of various sizes and shapes. DU performs lower layer protocol processing. CU performs the upper layer protocol processing. Depending on operator and service requirements, base stations 106 can be deployed monolithically, e.g., RU, DU, and CU reside within a particular geographically located cell site, or these functionalities can be distributed across geographically different cell sites while the CU resides in an edge cloud site controlling a plurality of distributed DUs. O-RAN is, for example, an approach to networking in which disaggregated functions can be used to deploy mobile front-haul and mid-haul networks. The disaggregated functions can be cloud-based functions.

Radio access networks 109 connect to core 105 to exchange packets with data network 140. Core 105 may be a 5G core network, and data network (DN) 140 may represent, for example, one or more service provider networks and services, the Internet, third party services, one or more IP-VPNs, an IP-multimedia subsystem, a combination thereof, or other network or combination of networks. In some examples, resources associated with the service provided by a mobile network operator to the tenant may be provided by, or managed by, functions of core 105 and/or components of RAN 109. In some examples, core 105 implements various discrete control plane and user plane functions for network system 100. Examples of 5G control plane functions that may be provided by core 105 include Access Mobility Management Function (AMF) that provides access mobility management services, Session Management Function (SMF) that provides session management services, Policy Control Function (PCF) that provides policy control services, User Data Management (UDM) that provides management of network user data, Network Repository Function (NRF) that provides a repository that can be used to register and discover services in a network operator's network, Authentication Server Function (AUSF) that provides authentication services, Network Slice Selection Function (NSSF), Network Slice Management Function (NSMF) that may be used to select an instance of an available network slice for use by any of UE devices 104, and Network Slice Subnet Management Function (NSSMF) that provides coordination, management, and orchestration of network slice subnet instances (NSSI). Core 105 may also include User Plane Functions (UPF) that provides packet routing, forwarding and other network data processing functions (e.g., Quality of Service, packet inspection, traffic optimization etc.). Further details on services and functions provided by the 5G core can be found in 3^{rd} Generation Partnership Project Technical Specification Group Services and System Aspects; System architecture for the 5G System (5GS); Stage 2 (Release 18), TS 23.501 V18.2.2 (2023-07), the entire contents of which is hereby incorporated by reference. Further details on the O-RAN architecture can be found in O-RAN Alliance, "O-RAN Work Group 1 (Use Cases and Overall Architecture) O-RAN Architecture Description," O-RAN.WG1.OAD-R003-v12.00, June 2024, the entire contents of which is hereby incorporated by reference.

Aspects of RAN 109 may be managed and/or monitored by SMO 112, non-RT RIC 122, and near-RT RIC 124. In some examples, SMO 112, non-RT RIC 122, and near-RT RIC 124 may be operated by the mobile network operator providing 5G services to a tenant. SMO 112 can orchestrate and control management and automation aspects of RAN 109 (e.g., network slicing, management, and orchestration of O-Cloud, etc.). Further, SMO 112 may control aspects of non-RT RIC 122 and near-RT RIC 124. Non-RT RIC 122 can provide non-real-time (e.g., greater than one second) control and optimization of RAN elements and resources such as RUs, DUs, and CUs, workflow management, and policy-based control of applications and features of near-RT RIC 124. Near-RT RIC 124 can provide near-real-time (e.g., milliseconds) control and optimization of RAN elements and resources via fine-grained data collection and actions. As further described in FIG. 1B and FIG. 1C, non-RT RIC 122 and near-RT RIC 124 may deploy as a highly scalable, microservices based containerized architecture, such as a Kubernetes architecture. In some examples, near-RT RIC 124 may be located within an edge or regional cloud.

Non-RT RIC 122 may onboard one or more applications, e.g., applications 123, which may include rApps that manage non-real time events within non-RT RIC 122, such as applications that do not require response times of less than one second. Applications 123 may leverage the functionality exposed via the non-RT RIC framework of non-RT RIC 122. Applications 123 may be used to control and manage RAN elements and resources, such as near-RT RIC 124, RAN nodes, and/or resources in the O-RAN cloud. Applications 123 may also utilize network data, performance metrics, and subscriber data to provide recommendations for network optimization and operational guidance (e.g., policies) to one or more applications of near-RT RIC 124. Near-RT RIC 124 may onboard one or more applications, e.g., applications 125, which may include xApps, that manage near-real time events within near-RT RIC 124. Applications 125 may leverage the functionality exposed via the near-RT RIC framework of near-RT RIC 124. Near-RT RIC 124 may enforce policies received from applications 123 of non-RT RIC 122 and may provide policy feedback to non-RT RIC 122. Although illustrated as within non-RT RIC 122, any one or more of applications 123 may be executed by a third party, separate from non-RT RIC 122. Likewise, although illustrated as within near-RT RIC 124, any one or more of applications 125 may be executed by a third party, separate from near-RT RIC 124.

The O-RAN architecture includes several interfaces, such as A1, O1, O2, and E2 interfaces, that are each used to provide the functions and services by which the SMO and RIC can configure or direct other components of the RAN. For example, the functions and services of non-RT RIC may include policy management services and/or enrichment information services for a near-RT RIC that are provided over an A1 interface (collectively referred to herein as "A1 services" because they provided over the A1 interface); performance management services, configuration management services, and/or Operations, Administration, and Management (OAM) services for O-RAN management elements that are provided over an O1 interface (referred to herein as "O1 services" because they are provided over the O1 interface); configuration management services and performance management services for resources of an O-RAN cloud that are provided over an O2 interface (referred to herein as "O2 services" because they are provided over the O2 interface), and/or other services, such as service management and exposure (SME) services (e.g., registration of a service, update of a service registration), data management and exposure (DME) services, and/or AI/ML services. The functions and services for a near-RT RIC may include control procedures and functionalities to control O-RAN elements, such as radio units (RUs), distributed units (DUs), and central units (CUs), that are provided over an E2 interface and may be referred to as "E2 services" because they are provided over the E2 interface.

As described further below, non-RT RIC 122 may provide services using A1 and O1 interfaces. An A1 interface connects the non-RT RIC 122 and near-RT RIC 124. Non-RT RIC 122 may perform services via the A1 interface, such as policy management services (e.g., creation and update of a policy), ML model management services, and/or enrichment information services. Services performed via the A1 interface are referred to herein as "A1 services." An O1 interface may include an interface that connects SMO 112 with O-RAN managed elements, such as near-RT RIC 124 and/or RAN nodes (e.g., O-RAN centralized unit (O-CU), O-RAN distributed unit (O-DU)). Non-RT RIC 122 may perform services via the O1 interface, such as configuration management services and performance management services of O-RAN managed elements (e.g., operation and maintenance (OAM) services), fault supervision, file management, heartbeat, trace, physical network function (PNF) discovery, software management, etc.). Services performed via the O1 interface are referred to herein as "O1 services." An O2 interface may include an interface that connects SMO 112 to resources of the ORAN O-Cloud. The O-Cloud may comprise of one or more physical infrastructure nodes that host O-RAN functions (e.g., virtual network functions), the supporting software components, and the appropriate management and orchestration functions. Non-RT RIC 122 may also perform other functions and services, such as service management and exposure (SME) services (e.g., registration of a service, update of a service registration), data management and exposure (DME) services, AI/ML services, or the like.

An E2 interface may include an interface that connects near-RT RIC 124 to RAN nodes. Near-RT RIC 124 may control and/or manage (e.g., configure) functionalities of the RAN nodes via the E2 interface.

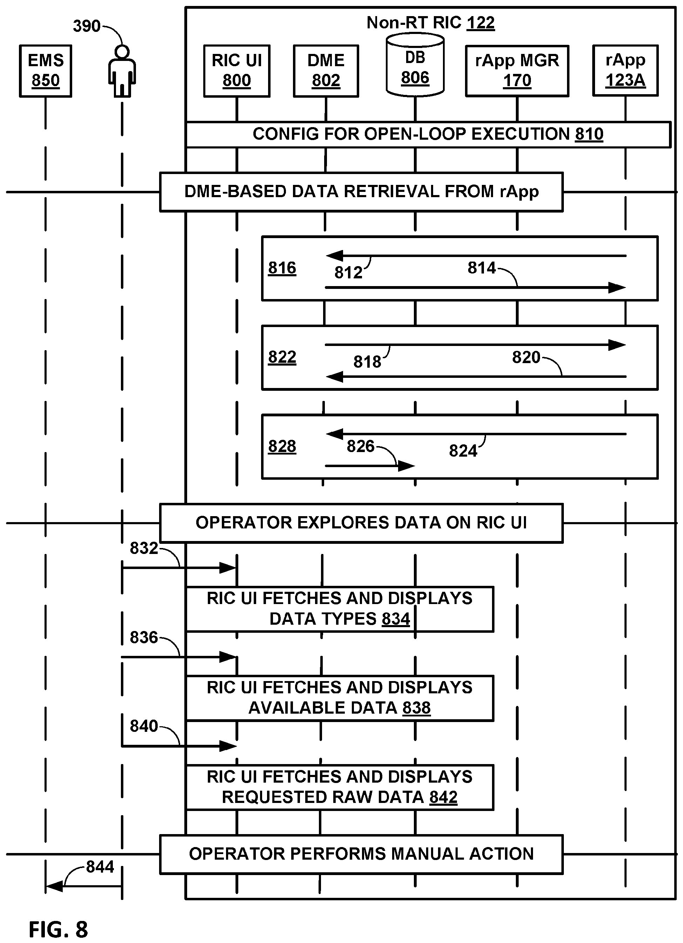

Open-loop manager 121 may manage open-loop operation of rApps, such as applications 123. In an example, open-loop manager 121 may utilize data management and exposure (DME) services techniques to provide open-loop operation of rApps. In another example, open-loop manager 121 may utilize interception techniques to provide open-loop operation of rApps. Such techniques are described hereinafter in more detail with respect to FIGS. 8, 12, and 13.

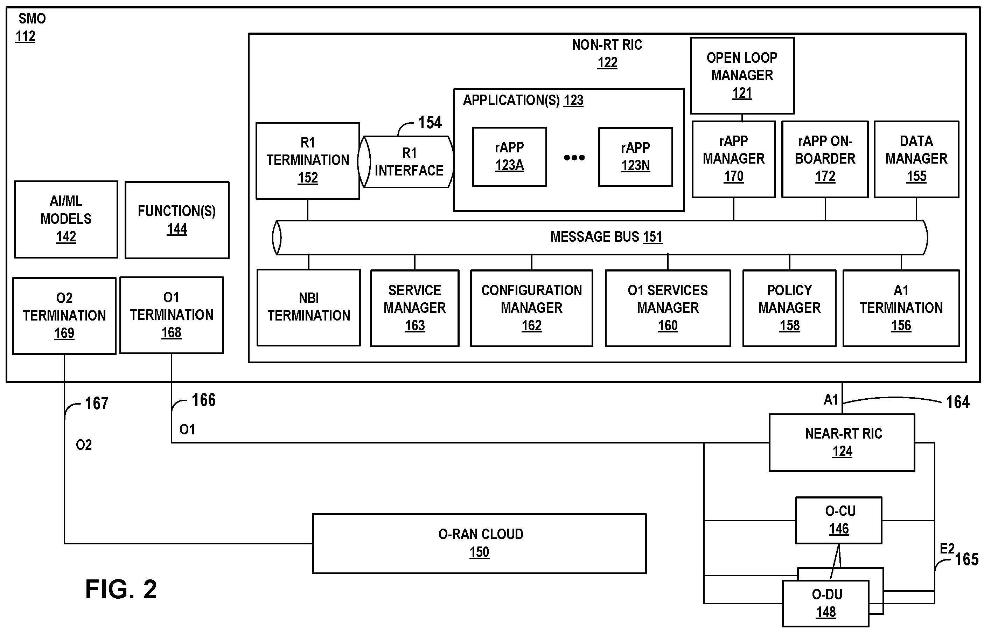

FIG. 2 is a block diagram illustrating further example details of the non-RT RIC 122 of FIG. 1. In the example illustrated in FIG. 2, SMO 112 may include non-RT RIC 122, one or more AI/ML models 142, one or more functions 144 (e.g., NSSMF, NFMF, and other functions), and open interfaces, such as O1 termination 168 and O2 termination 169. SMO 112 may manage non-RT RIC 122, near-RT RIC 124, O-RAN managed elements (e.g., centralized unit (O-CU) 146, O-RAN decentralized unit (O-DU) 148 of one or more base stations), and resources in O-RAN cloud 150. In the example of FIG. 1B, non-RT RIC includes open-loop manager 121.

Non-RT RIC 122 may provide non-real-time (e.g., greater than one second) control and optimization of RAN elements and resources such as RUs, DUs, and CUs, workflow management, and policy-based control of applications and features of near-RT RIC 124. Non-RT RIC 122 may be deployed as a highly scalable, microservices based containerized architecture. In this example, non-RT RIC 122 may onboard, deploy, and/or terminate one or more applications, e.g., rApp 123A through rApp 123N (collectively "applications 123"). Applications 123 may represent applications that leverage the functionality exposed via the framework of non-RT RIC 122. Applications 123 may provide non-RT RIC 122 with non-real time (e.g., greater than one second) control of RAN elements and their resources. Applications 123 may provide services for radio resource management, higher layer procedure optimization, policy optimization, and providing guidance, parameters, policies, and AI/ML models to support the operation of RAN functions.

For example, applications 123 may provide A1 services that provide and facilitate RAN operations and optimization of near-RT RIC 124, such as providing operational guidance (e.g., policies), enrichment information (e.g., forecasts), and AI/ML services. A1 services may include policy management services such as creating, updating, and/or deleting of A1 policies; receiving policy feedback; querying policy types, identifiers, and status; defining which policy types are supported by near-RT RIC 124; and registering applications (xApps) of near-RT RIC 124 to specific policy types. A1 services may include enrichment information services, such as providing data for model training of AI/ML models, such as forecasts and/or data analytics.

Applications 123 may provide O1 services that provide configuration management or performance management of O-RAN managed entities, such as near-RT RIC 124 and/or RAN nodes, e.g., O-CU 146, O-DU 148 (also referred to herein as "E2 nodes"). O1 services may provide configuration management services to create, update, and/or delete configurations to O-RAN managed entities. For example, configuration management services may include provisioning operations (e.g., for NSS and NF provisioning) to create a managed object instance (MOI), obtain MOI attributes, modify MOI attributes, and/or delete the MOI. O1 services may also provide performance management services that monitor the status of elements or components in the O-RAN managed entities. For example, non-RT RIC 122 may create, modify, or delete performance management jobs to receive performance metrics, or send heartbeat messages to monitor the status and/or availability of services of RAN nodes or to send trace messages to monitor link failures. O1 services may also provide file management, such as to push files to the RAN nodes (e.g., software updates, beamforming configuration files, ML models, security certificates, etc.).

Applications 123 may provide O2 services that provide infrastructure management and/or network function deployment of resources in O-RAN cloud 150 (also referred to herein as "O-Cloud 150"). O2 services may provide discovery and administration of O-Cloud resources; Scale-In, Scale-Out of cloud/deployments (e.g., deploying resources with more or less processors); FCAPS of cloud/deployments, software management of cloud platform/deployments; create/delete deployment and associated allocated O-Cloud resources.

Applications 123 may provide service management and exposure (SME) services, data management and exposure (DME) services, and/or other services. SME services may provide services that enable services provided over an internal interface (R1 interface 154) of non-RT RIC 122 and their exposure and extensibility through services including bootstrap, service registration/deregistration or updates to service registration, service discovery or notification, heartbeat, authentication, authorization, etc. Data management and exposure (DME) services may include services that manage data and their exposure between applications 123. For example, applications 123 may have different functions, such as application 123A configured to collect and analyze data, application 123B configured to generate an ML model based on the results of the analysis, and application 123N configured to make a prediction or inference using the ML model and/or to generate controls for RAN nodes based on the prediction or inference. DME services may manage the data shared between applications 123, such as the collection of data, the processing of the data, and/or the advertisement of the data.

Non-RT RIC 122 may include one or more managers to process the A1, O1, O2, SME, DME services, and other services. For example, non-RT RIC 122 may include a policy manager 158, O1 services manager 160, configuration manager 162, service manager 163, and data manager 155. Non-RT RIC 122 may include other managers, such as an application manager (e.g., rApp manager 170) and an application on-boarder (e.g., rApp on-boarder 172), that are configured to manage the installation and deployment of applications 123.

Policy manager 158 is configured to control the deployment of policies (e.g., A1 services). For example, in response to receiving requests for A1 services from applications 123 via R1 interface 154, R1 interface 154 sends the requests to policy manager 158 via message bus 151. Policy manager 158 may process the A1 services and may send the A1 services to A1 termination 156 via message bus 151, which provides the A1 services to near-RT RIC 124 via A1 interface 164. In some examples, the A1 interface may implement an A1AP application protocol based on the O-RAN specifications.

Policy manager 158 may provide for A1 policy management services including providing a policy management service API. Such an API is provided to allow rApps be able to reach an A1 policy service of near-RT RIC 124. This service gives rApps the ability to discover and manage A1 policies. A1 policy management services may include policy create, read, update, and/or delete (CRUD) operations that can be sent to near-RT RIC 124. CRUD operations include create policy, delete policy, update policy, query policy, query enforcement status, query policy type, query policy type identifiers, query policy identifiers, and/or the like.

O1 services manager 160 is configured to control the deployment of O1 services for monitoring the performance of near-RT RIC 124 and/or RAN nodes (e.g., O-CU 146, O-DU 148). For example, in response to receiving requests for O1 services for monitoring the performance of near-RT RIC 124 from applications 123 via R1 interface 154, R1 interface 154 sends the requests to O1 services manager 160 via message bus 151. O1 services manager 160 may process the O1 services and may send the O1 services to O1 termination 168, which provides the O1 services to near-RT RIC 124 via O1 interface 166. In some examples, the O1 interface may implement REST/HTTPS APIs and/or NETCONF.

O1 services manager 160 is additionally, or alternatively, configured to control the deployment of O1 services for the configuration of near-RT RIC 124 and/or RAN nodes. For example, in response to receiving requests for O1 services for the configuration of near-RT RIC 124 from applications 123 via R1 interface 154, R1 interface 154 sends the requests to O1 services manager 160. O1 services manager 160 may process the O1 services and may send the O1 services to O1 termination 168, which provides the O1 services to near-RT RIC 124 via O1 interface 166.

Configuration manager 162 may be configured to provide a configuration management service API. The configuration management service API may be discoverable by a service exposure service. The API may be provided to enable rApps to reach network functions. This service gives rApps the ability to discover and manage configurations, such as configurations of elements of RAN 109, and/or the like. Configuration changes may be sent by non-RT RIC 124 to rApps. CRUD operations can be sent with the configuration management service include create configuration, delete configuration, modify configuration, query configuration, subscribe configuration changes, and/or the like.

In some examples, R1 interface 154 also exposes applications 123 to SME services, DME services, and/or other services. For example, in response to receiving requests for SME services from applications 123 via R1 interface 154, R1 interface 154 sends the requests to service manager 163. Service manager 163 may process the SME services (e.g., register/update a service) and may send the SME services to R1 termination 152, which provides the SME services to applications 123 via R1 interface 154 (e.g., sending response to application regarding service registration, update, or discovery). Similarly, in response to receiving requests for DME services from applications 123 via R1 interface 154, R1 interface 154 sends the requests to data manager 155. Data manager 155 may process the DME services and may send the DME services to R1 termination 152, which provides the DME services to applications 123 via R1 interface 154 (e.g., sending data from application configured as a data producer to application configured as a data consumer).

For example, data manager 155 may provide a Data Management Service API that may be discovered by a service management and exposure (SME) - Service Exposure Service. The SME - Service Exposure Service may facilitate a producer rApp (e.g., an rApp that produces data and/or executable code for affecting a change in RAN 109) to register different data types that may be discoverable by other rApps. For example, available data types within the DME may be discovered by consumer rApps (e.g., rApps that may intake or consume data or executable code). rApps may subscribe to receive notifications from non-RT RIC 122 upon any data type changes. For example, an rApp may subscribe to changes to a particular data type. Data producers (e.g., rApps) can push the data to non-RT RIC 122 when available. Subscribed consumer rApps may be notified when data is available and rApps can receive the data from non-RT RIC 122. Different data management services that may be available from DME services include register data types, discover data types, subscribe data type changes, unsubscribe data type changes, and subscribe data.

R1 interface 154 may also expose applications 123 to slice subnet management services, such as RAN NSSMF interfaces to retrieve slice service level agreements (SLAs) and slice topologies, and/or slice management, SLA, and slice performance management notifications to applications 123.

Open-loop manager 121 may manage open-loop operation of rApps, such as applications 123. In an example, open-loop manager 121 may utilize data management and exposure (DME) services techniques to provide open-loop operation of rApps. In another example, open-loop manager 121 may utilize interception techniques to provide open-loop operation of rApps. Such techniques are described hereinafter in more detail with respect to FIGS. 8, 12 and 13. It should be noted that open-loop manager 121 may be implemented using one or more separate microservices or existing microservices. For example, open-loop manager 121 may be implemented using a new microservice, data manager 155, policy manager 158, configuration manager 162, and/or the like.

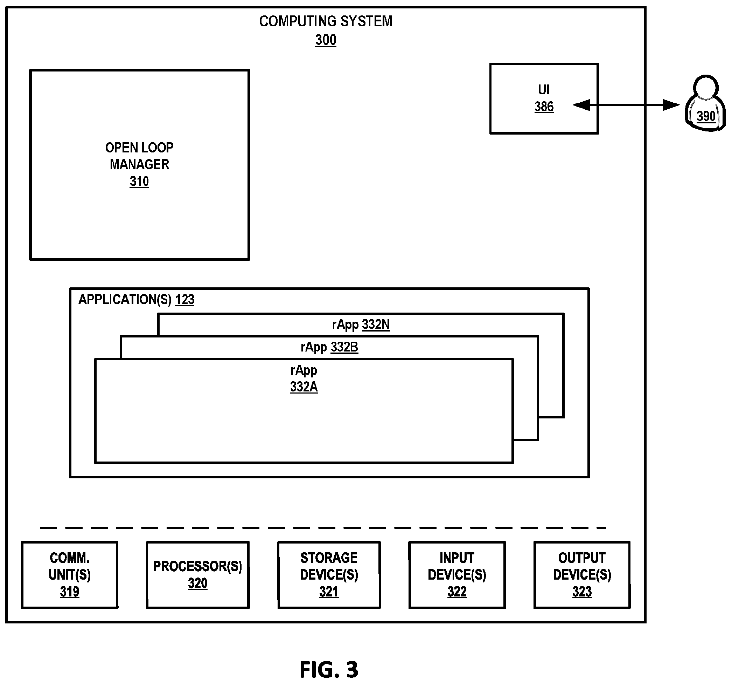

FIG. 3 is a diagram illustrating an example computing system in accordance with techniques of this disclosure. In the example of FIG. 3, computing system 300 may implement non-RT RIC 122 of FIGS. 1 and 2. Open-loop manager 310 may be an example of open-loop manager 121 of FIGS. 1 and 2

Computing system 300 includes one or more processors 320, one or more input devices 322, one or more output devices 323, one or more communication units 319, one or more storage devices 321, and user interface (UI) 386. In some examples, computing system 300 is a cloud computing system, server farm, and/or server cluster (or portion thereof) that provides services to client devices and other devices or systems. In other examples, computing system 300 may be implemented through one or more virtualized compute instances (e.g., virtual machines, containers) of a data center, cloud computing system, server farm, and/or server cluster.

One or more of the devices, modules, storage areas, or other components of computing system 300 may be interconnected to enable inter-component communications (physically, communicatively, and/or operatively). In some examples, such connectivity may be provided by communication channels, a system bus, a network connection, an inter-process communication data structure, or any other method for communicating data.

One or more processors 320 of computing system 300 may implement functionality and/or execute instructions associated with open-loop operation of rApps as described herein. One or more processors 320 may be, may be part of, and/or may include processing circuitry that performs operations in accordance with one or more aspects of the present disclosure. Examples of processors 320 include microprocessors, application processors, display controllers, auxiliary processors, one or more sensor hubs, and any other hardware configured to function as a processor, a processing unit, or a processing device. Computing system 300 may use one or more processors 320 to perform operations in accordance with one or more aspects of the present disclosure using software, hardware, firmware, or a mixture of hardware, software, and firmware residing in and/or executing at computing system 300. In some examples, any one or more of applications 123 may be hosted by a cloud provider or other third-party.

One or more communication units 319 of computing system 300 may communicate with devices external to computing system 300 by transmitting and/or receiving data, and may operate, in some respects, as both an input device and an output device. In some examples, communication units 319 may communicate with other devices over a network. In other examples, communication units 319 may send and/or receive radio signals on a radio network such as a cellular radio network. In other examples, communication units 319 of computing system 300 may transmit and/or receive satellite signals on a satellite network such as a Global Positioning System (GPS) network. Examples of communication units 319 include a network interface card (e.g., an Ethernet card), an optical transceiver, a radio frequency transceiver, a GPS receiver, or any other type of device that can send and/or receive information. Other examples of communication units 319 may include devices capable of communicating over Bluetooth^{®}, GPS, NFC, ZigBee, and cellular networks (e.g., 3G, 4G, 5G), and Wi-Fi^{®} radios found in mobile devices as well as Universal Serial Bus (USB) controllers and the like. Such communications may adhere to, implement, or abide by appropriate protocols, including Transmission Control Protocol/Internet Protocol (TCP/IP), Ethernet, Bluetooth, NFC, or other technologies or protocols.

One or more input devices 322 may represent any input devices of computing system 300 not otherwise separately described herein. One or more input devices 322 may generate, receive, and/or process input from any type of device capable of detecting input from a human or machine. For example, one or more input devices 322 may generate, receive, and/or process input in the form of electrical, physical, audio, image, and/or visual input (e.g., peripheral device, keyboard, microphone, camera).

One or more output devices 323 may represent any output devices of computing system 300 not otherwise separately described herein. One or more output devices 323 may generate, receive, and/or process input from any type of device capable of detecting input from a human or machine. For example, one or more output devices 323 may generate, receive, and/or process output in the form of electrical and/or physical output (e.g., peripheral device, actuator).

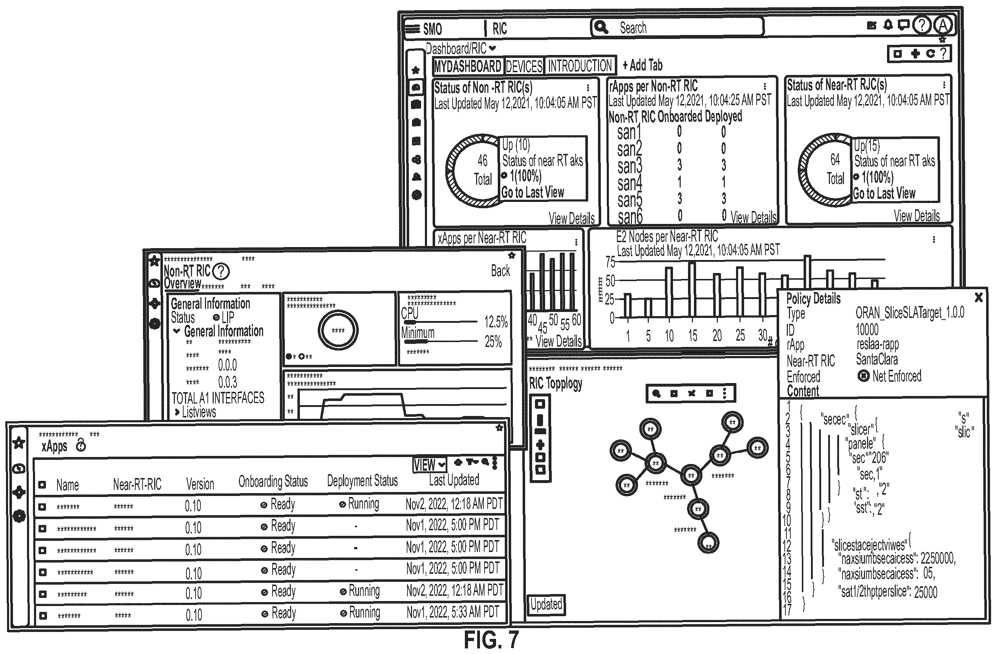

UI 386 may include UIs that, in some examples, may be presented on output device(s) 323, a touch screen, a display device, and/or the like. UI 386 may include any of the UIs described hereinafter with respect to FIGS. 7 and 9-11. UI 386 may facilitate an operator reviewing data or code generated by, or output from, rApps 332. In some examples, UI 386 may facilitate an operator 390 actually applying changes that would have been made by rApps 332 had rApps 332 been operating in a closed-loop manner, so as to implement the changes that rApps 332 suggested or attempted to implement, for example, in network 100 of FIG. 1.

One or more storage devices 321 within computing system 300 may store information for processing during operation of computing system 300. Storage devices 321 may store program instructions and/or data associated with one or more of the modules described in accordance with one or more aspects of this disclosure. One or more processors 320 and one or more storage devices 321 may provide an operating environment or platform for such modules, which may be implemented as software, but may in some examples include any combination of hardware, firmware, and software. One or more processors 320 may execute instructions and one or more storage devices 321 may store instructions and/or data of one or more modules. The combination of processors 320 and storage devices 321 may retrieve, store, and/or execute the instructions and/or data of one or more applications, modules, or software. Processors 320 and/or storage devices 321 may also be operably coupled to one or more other software and/or hardware components, including, but not limited to, one or more of the components of computing system 300 and/or one or more devices or systems illustrated as being connected to computing system 300.

In some examples, one or more storage devices 321 are temporary memories, meaning that a primary purpose of the one or more storage devices is not long-term storage. Storage devices 321 of computing system 300 may be configured for short-term storage of information as volatile memory and therefore not retain stored contents if deactivated. Examples of volatile memories include random access memories (RAM), dynamic random-access memories (DRAM), static random-access memories (SRAM), and other forms of volatile memories known in the art. Storage devices 321, in some examples, also include one or more computer-readable storage media. Storage devices 321 may be configured to store larger amounts of information than volatile memory. Storage devices 321 may further be configured for long-term storage of information as non-volatile memory space and retain information after activate/off cycles. Examples of non-volatile memories include magnetic hard disks, optical discs, Flash memories, or forms of electrically programmable memories (EPROM) or electrically erasable and programmable (EEPROM) memories.

Computing system 300 may include one or more modules or units configured to perform one or more services or functions of applications 123 or any of the functions of non-RT RIC 122, as described above and shown with respect to FIGS. 1 and 2.

Computing system 300 may include open-loop manager 310. Open-loop manager 310 may be an example of open-loop manager 121 (FIGS. 1-2) and may be configured to perform the open-loop operation techniques described herein. For example, computing system 300 may provide open-loop operation for application(s) 123, which may include rApps 332A-332N (collectively "rApps 332") Although shown as executing on the same computing system 300 as open-loop manager 310, rApps 332 may execute on different computing systems.

Computing system 300 may execute one or more of rApps 332 in an open-loop mode. For example, operator 390 may desire to observe the changes that rApp 332A may otherwise make in RAN 109, prior to actually allowing rApp 332A to operate in a closed-loop mode where such changes would be automatically implemented in RAN 109 without human intervention. In such a case, operator 390 may set up rApp 332A to operate in the open-loop mode via UI 386. In such a case, open-loop manager 310 would then manage the operation of rApp 332A such that rApp 332A is unable to automatically make changes to RAN 109, such as changes to optimize network operations of RAN 109. rApp 332A may be unable to automatically make changes because it is configured to refrain from automatically making such changes, prevented from automatically making such changes, or otherwise does not automatically make such changes. "Automatic" may refer to acting without additional input or permission from a user, software application, or other entity.

When rApp 332A is operating in the open-loop mode, operator 390 could, after reviewing the changes rApp 332A determined to make to RAN 109, implement the changes in RAN 109 manually, modify the changes, reject the changes, or approve the changes such that rApp 332A and/or computing system 300 executes such changes. At some point in time, the operator may decide to switch the mode of rApp 332A from an open-loop mode to a closed-loop mode. The operator may do so via UI 386.

For example, to operate rApp 332A in an open-loop mode, open-loop manager 310 may utilize DME service data type subscription techniques or may use interception techniques to intercept data indicative of the changes that rApp 332A determines to make in RAN 109. Such techniques are described further hereinafter.

According to the techniques of this disclosure, computing device 300 may execute one or more applications configured to determine one or more changes to make to the RAN in an open-loop mode, wherein in the open-loop mode the one or more applications are unable to automatically make the one or more changes to make to the RAN. Computing device 300 may control a user interface (UI) to present data indicative of the one or more changes to make to the RAN for display to a user.

In some examples, open-loop manager 121 and/or 310 may be implemented using one or more of DME services, A1 policy related services, and/or RAN OAM configuration related services. Such services may be provided by data manager 155, policy manager 158, configuration manager 162, and/or other or new microservices. For example, open-loop manager 121 and/or 310 may implement open-loop management of one or more rApps using the data type subscription and/or the modification request interception techniques described herein.

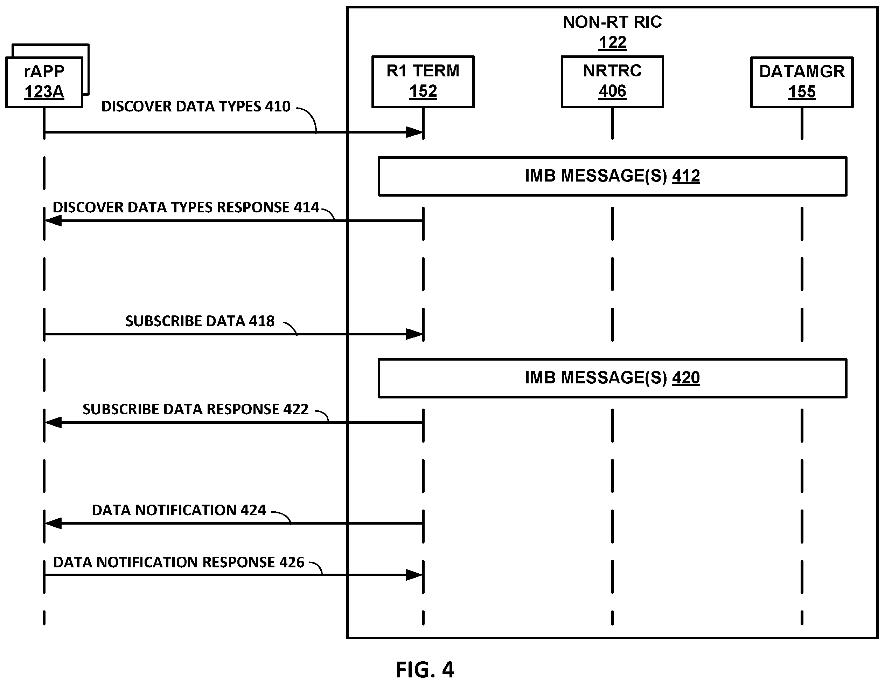

FIG. 4 is a flow diagram illustrating example data management and exposure (DME) services techniques. In some examples, DME services may be provided by data manager 155 (FIG. 2). In some examples, DME techniques may be used to implement open-loop manager 121 and/or 310. A Data Management Service API can be discovered by a service management and exposure (SME) - Service Exposure Service. Different data types can be registered by a producer rApp (e.g., rApp 332A of FIG. 3) that can be discoverable by other rApps. Available data types within the DME can be discovered by consumer rApps (e.g., rApp 332B of FIG. 3). rApps can subscribe to receive notifications from non-RT RIC 122 upon any data type changes. For example, an rApp may subscribe to changes to a particular data type. Data producers (e.g., rApps) can push the data to non-RT RIC 122 when data is available to push. Subscribed consumer rApps may be notified when data of a subscribed data type is available and rApps can receive the data of the subscribed data type from non-RT RIC 122. Different data management services that may be available from DME services include register data types, discover data types, subscribe data type changes, unsubscribe data type changes, and subscribe data.

In the example of FIG. 4, rApp 123A of rApps 123 may send a discover data types message 410 to R1 termination 152 of non-RT RIC 122. For example, rApp 123A may send a "GET /dataTypes" message to R1 termination 152. Non-RT RIC 122 may coordinate a response between data manager (DATAMGR) 155 and non-RT RIC components (NRTRC) 406 using one or more internal message bus message(s) (IMBs) 412 which, for example, may be sent over message bus 151 (FIG. 2). R1 termination 152 may send a discovered data types response message 414 to rApp 123A. For example, discovered data types response message 414 may include "200 OK (DataTypeIDList)."

rApp 123A may then attempt to subscribe to related data for one or more (or all) of the discovered data types. For example, rApp 123A may send a subscribe data message 418 to R1 termination 152. For example, the subscribe data message 418 may include "PUT /data/subscription DataSubscription." Non-RT RIC 122 may coordinate a response between data manager 155 and non-RT RIC components 406 using one or more internal message bus message(s) 420 which, for example, may be sent over message bus 151. R1 termination 152 may send a subscribed data response message 422 to rApp 123A. For example, subscribed data response message 422 may include "201 Created," indicating that the subscription was successful.

After rApp 123A successfully subscribes to the discovered data types, non-RT RIC 122 may monitor for the subscribed data types. When the subscribed data types are encountered, R1 termination 152 may send a data notification message 424 to rApp 123A. For example, data notification message 424 may include "/#DataSubscription.notificationUri." rApp 123A may send a data notification response message 426 to R1 termination 152 indicating rApp 123A received the data notification message 424. For example, data notification response message 426 may include "200 OK."

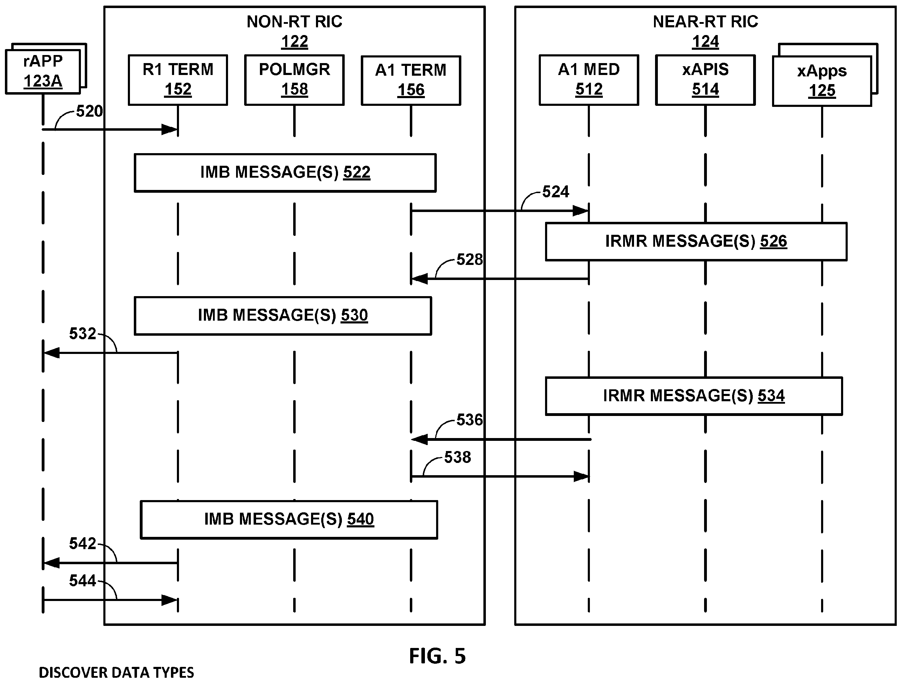

FIG. 5 is a flow diagram illustrating example A1 policy management services techniques. In some examples, A1 policy management services may be provided by policy manager 158 (FIG. 2). In some examples, policy management techniques may be used to implement open-loop manager 121 and/or 310. A policy management service API may be discovered by a service exposure service. Such an API is provided to enable rApps to reach an A1 policy service of near-RT RIC 124. This service gives rApps the ability to discover and manage A1 policies. A policy enforcement status can be sent by near-RT RIC 124 to rApps, for example, if a notification uniform resource locator (URL) is set in a create policy message.

A1 policy management services may include policy CRUD operations that can be sent to near-RT RIC 124. CRUD operations include create policy, delete policy, update policy, query policy, query enforcement status, query policy type, query policy type identifiers, query policy identifiers, and/or the like.

For example, rApp 123A may send a create policy message 520 to R1 termination 152 of non-RT RIC 122. Create policy message 520 may include "PUT policytypes/{policyTypeId}/policies/{policyId} (PolicyObject, notificationDestination)." Non-RT RIC 122 may coordinate across R1 termination 152, policy manager (POLMGR) 158, and A1 termination 156, using one or more internal message bus messages 522 which, for example, may be sent over message bus 151, to send a create policy request to near-RT RIC 124.

A1 termination 156 may send one or more create policy messages 524 to A1 mediator 512 of near-RT RIC 124. For example, one or more create policy messages 524 may include PUT policytypes/{policyTypeId}/policies/{policyId} (PolicyObject, notificationDestination)."

Near-RT RIC 124 may coordinate between A1 mediator 512, xApp API server (xAPIS) 514, and xApps 125 via internal RMR messages 526 to send the create policy request(s) to xApps 125 and to receive created response(s) from xApps 125. A1 mediator 512 may send a policy created response message 528. For example, policy created response message 528 may include "201 Created (PolicyObject)."

Non-RT RIC 122 may use one or more IMB messages 530 to relay the received policy created response through non-RT RIC 122, for example, over message bus 151. R1 termination 152 may send policy created response message 532 to rApp 123A.

With the policy in place, near-RT RIC 124 may use one or more internal RMR messages 534 for enforcement status notification. For example, A1 mediator 512 may send a notify enforcement status message 536 to A1 termination 156. For example, notify enforcement status message 536 may include "POST notificationDestination/(PolicyObject)." A1 termination 156 may respond to notify enforcement status message 536 with a notify enforcement status response message 538. For example, notify enforcement status response message 538 may include "200 OK."

Non-RT RIC 122 may use one or more internal message bus messages 540 for example, over message bus 151, to facilitate the sending of notify enforcement status messages to rApp 123A. R1 termination 152 may send notify enforcement status message 542 to rApp 123A. For example, notify enforcement status message 542 may include "POST notificationDestination/(PolicyObject)." rApp 123A may respond to notify enforcement status message 542 by sending a notify enforcement status message 544 to R1 termination 152. For example, notify enforcement status message 542 may include "200 OK."

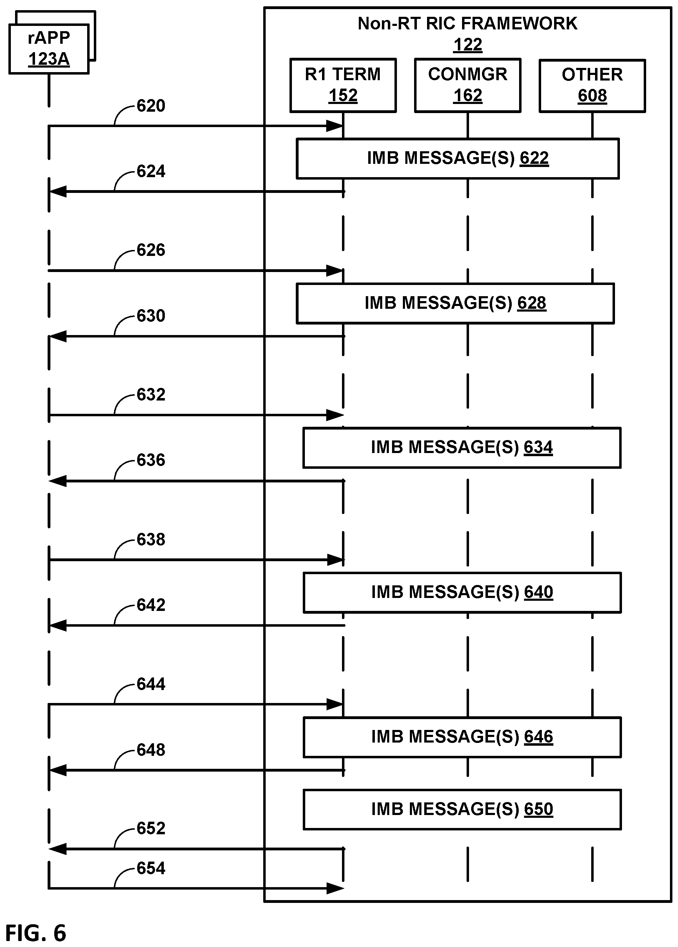

FIG. 6 is a flow diagram illustrating example RAN OAM configuration management services techniques. In some examples, RAN OAM configuration management services may be provided by configuration manager 162. In some examples, configuration management techniques may be used to implement open-loop manager 121 and/or 310. A configuration management service API can be discovered by a service exposure service. The API may be provided to enable rApps to reach network functions. This service gives rApps the ability to discover and manage configurations, such as configurations of elements of RAN 109, and/or the like. Configuration changes may be sent by non-RT RIC 124 to rApps 123. CRUD operations can be sent with the configuration management service include create configuration, delete configuration, modify configuration, query configuration, subscribe configuration changes, and/or the like.

For example, rApp 123A may send a create configuration message 620 to R1 termination 152 of non-RT RIC 122. For example, create configuration message 620 may include "POST /configurations (Configurationinfo)." Non-RT RIC 122 may use one or more internal message bus messages 622, for example, over message bus 151, to coordinate the application of the configurations with configuration manager (CONMGR) 162 and other components 608. R1 termination 152 may send a create configuration response message 624 to rApp 123A. For example, create configuration response message 624 may include "201 Created."

rApp 123A may send a query configuration message 626 to R1 termination 152 of non-RT RIC 122. For example, query configuration message 626 may include "GET /configurations (Configurationinfo)." Non-RT RIC 122 may use one or more internal message bus messages 628, for example, over message bus 151, to coordinate the retrieval of the configurations with configuration manager 162 and other components 608. R1 termination 152 may send a query configuration response message 630 to rApp 123A. For example, query configuration response message 630 may include "200 OK (Configurationinfo)."

rApp 123A may send a modify configuration message 632 to R1 termination 152 of non-RT RIC 122. For example, modify configuration message 632 may include "PUT /configurations (Configurationinfo)." Non-RT RIC 122 may use one or more internal message bus messages 634, for example, over message bus 151, to coordinate the modification of the configurations with configuration manager 162 and other components 608. R1 termination 152 may send a modify configuration response message 636 to rApp 123A. For example, query configuration response message 636 may include "200 OK (Configurationinfo)."

rApp 123A may send a delete configuration message 638 to R1 termination 152 of non-RT RIC 122. For example, delete configuration message 632 may include "DELETE /configurations (Configurationinfo)." Non-RT RIC 122 may use one or more internal message bus messages 640, for example, over message bus 151, to coordinate the deletion of the configuration(s) with configuration manager 162 and other components 608. R1 termination 152 may send a delete configuration response message 642 to rApp 123A. For example, delete configuration response messages 642 may include "204 No content."

rApp 123A may send a subscribe configuration change message 644 to R1 termination 152 of non-RT RIC 122. For example, subscribe configuration change messages 644 may include "PUT /configuration/subscriptions (ConfigurationSubscription)." Non-RT RIC 122 may use one or more internal message bus messages 646, for example, over message bus 151, to coordinate the subscription to the configuration changes with configuration manager 162 and other components 608. R1 termination 152 may send a subscription response message 648 to rApp 123A. For example, subscription response message 624 may include "200 OK (SubscriptionResponse)."

Non-RT RIC 122 may monitor for any configuration changes that may be made, for example, by other entities. When such changes may be made, non-RT RIC 122 may coordinate between configuration manager 162 and other components 608 using one or more internal message bus messages 650, for example, over message bus 151. R1 termination 152 may send a configuration changed message 652 to rApp 123A. For example, configuration changed message 652 may include "POST /configuration/ (ConfigurationNotification)." rApp 123A may respond with a configuration changed response message 654. For example, configuration changed response message 654 may include "200 OK."

FIG. 7 is a conceptual diagram illustrating example RIC user interfaces. Any of the screens shown in FIG. 7 may be part of UI 386 of FIG. 3. In some examples, one or more of the screens of FIG. 7 may be part of a UI for non-RT RIC 122 and/or near-RT RIC 124 and may provide a mechanism for an operator to interact with non-RT RIC 122 and/or near-RT RIC 124. The screens of FIG. 7 may include one or more dashboards, a RIC topology view, RIC Subscriptions, A1 policies, xApps and/or rApps views, E2 nodes views, and/or the like.

FIG. 8 is a flow diagram illustrating example DME-based open-loop execution for rApps techniques according to one or more aspects of this disclosure. A user, such as operator 390, or non-RT RIC 122, may configure an r/App (e.g., rApp 332A of FIG. 3) to run in an open-loop manner. rApp 332A may register the data type that is relevant to the use case that is going to be operating in the open-loop manner. A DME 802 may subscribe to the data that will be generated for the registered data type. Thus, when data becomes available by the producer rApp 332A of that data type, DME 802 receives that data and may store that data in a database 806, for example, of storage device(s) 321. For example, the data may include text or some other representation (e.g., executable code) of the changes that rApp 332A may attempt to make.

Operator 390 may view the recommended action by rApp 332A, for example, via RIC UI 800, which may be an example UI of UI 386 (FIG. 3). In the event that operator 390 desires to implement the recommended action, operator 390 may manually perform the configuration modification. This configuration modification may include affecting or implementing the changes that rApp332A may have determined to make to the RAN. In this manner, non-RT RIC 122 may facilitate an rApp to operate in an open-loop mode. By permitting operator 390 to view the recommended action by rApp 332A, rather than automatically implementing the recommended action, the techniques of this disclosure may allow operator 390 to effectively test rApp 332A under a live network environment without a risk that rApp 332A may undertake actions that damage or cause harm to operation of the network.

For example, non-RT RIC 122 may be configured for open-loop execution (e.g., open-loop mode) (810). Once non-RT RIC is configured to operate in open-loop mode, non-RT RIC 122 may perform DME-based data retrieval from an rApp, such as rApp 123A. For example, a producer rApp, such as rApp 123A, may register the data type that is relevant to the use case that is to run in open-loop mode (816). For example, rApp 123A may send a register data type request 812 to DME 802 (812). DME 802 may register the data type and send a register data type request response to rApp 123A indicating that the data type was registered (814). DME 802 may subscribe to data that will be generated for the registered data type (822). For example, DME 802 may send a subscribe data request to rApp 123A (818). In response, rApp 123A may send a subscribe data response to DME 802, acknowledging the subscription.

When data of the registered data type is available from rApp 123A, DME 802 may receive that data and store that data in database 804 (828). This receiving and storing of data by DME 802 may run in a loop, being repeated as more data is available. In some examples, when rApp 123A has a particular operation to perform, rApp 123A may send the particular operation in a container as data for the registered data type. For example, rApp 123A may send a container including executable code. This executable code may be code, which if executed may cause non-RT RIC 122 (or another computing device) to perform the particular operation. Each time data of the registered data type is available from rApp 123A, rApp 123A may send a push data message, carrying data of the registered data type to DME 802 (824). DME 802 may store the received data in database 804 (826). In the case that rApp 123A sends, as data of a particular data type, a container including executable code, when data becomes available by rApp 332A of that data type, DME 802 receives that data in a containerized form and may store that container in database 806, for example, of storage device(s) 321.

When data of the registered data type is stored in database 804, operator 390 may view the data via RIC UI 800. In some examples, the data may include a container including an operation that rApp 123A may try to perform. For example, operator 390 may enter a view data types command via RIC UI 800 (832). In response to receiving the view data types command, RIC UI 800 may fetch (e.g., from database 806) and display the data types (834). Operator 390 may enter a command to view available data produced by rApp 123A (836). In response to receiving the command to view available data produced by rApp 123A, RIC UI 800 may fetch (e.g., from database 806) and display available data produced by rApp 123A (838). Operator 390 may desire to review raw data produced by rApp 123A and may enter a command to view the raw data produced by rApp 123A (840). In response to receiving the command to view the raw data, RIC UI 800 may fetch (e.g., from database 806) and display the requested raw data (842).

Operator 390 may perform any manual actions that operator 390 may deem appropriate, for example, based on the data operator 390 reviews from RIC UI 800. For example, operator 390 may modify a configuration on element management system (EMS) 850 (844). In some examples, EMS 850 may be separate from non-RT RIC 122. In other examples, EMS 850 may be part of, or partially implemented in, non-RT RIC 122.

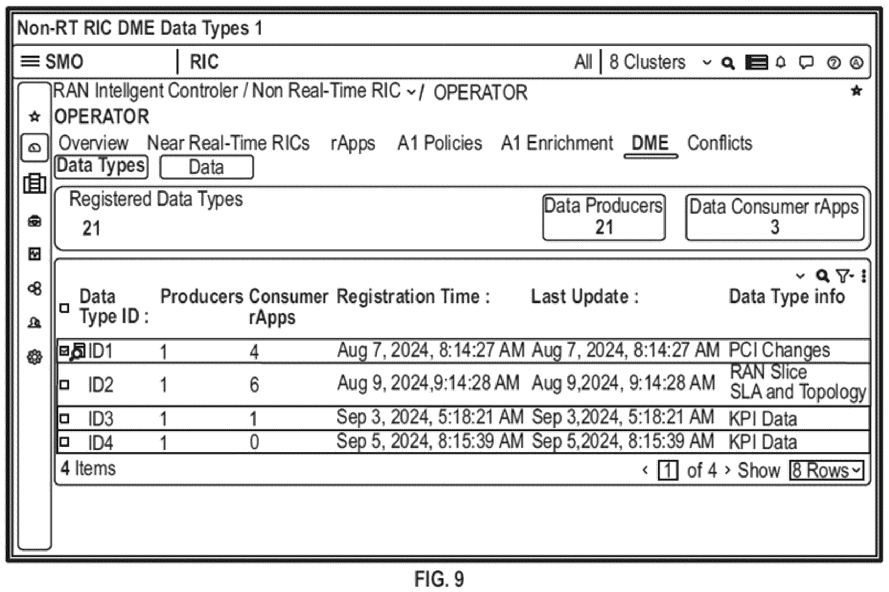

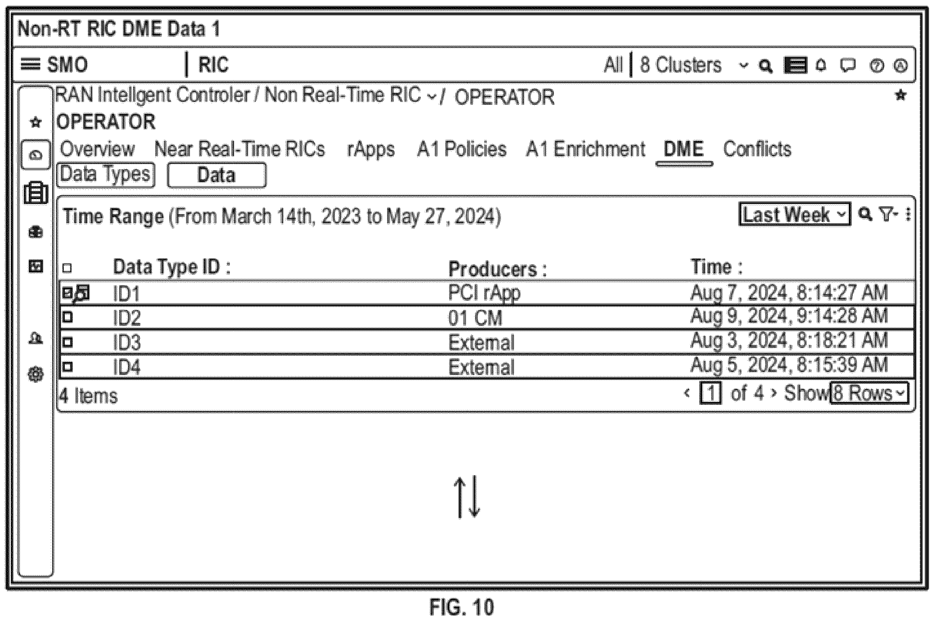

FIG. 9 is a conceptual diagram illustrating an example GUI according to one or more aspects of this disclosure. For example, the screen of FIG. 10 may include tabs for data types and data. When the data types tab is selected, UI 386 may present the user with a data types screen that allows a user to navigate amongst each of the data types (set forth in FIG. 10 as ID1, ID2, ID3, and ID4.

FIG. 10 is a conceptual diagram illustrating another example GUI according to one or more aspects of this disclosure. For example, the screen of FIG. 10 may include tabs for data types and data. When the data tab is selected and a particular data type (e.g., ID1) is selected, UI 386 may present the user with information on the particular data type. For example, the GUI of FIG. 10 may display that ID1 includes four sets of data of the data type ID1. The first being produced by a PCI rApp.

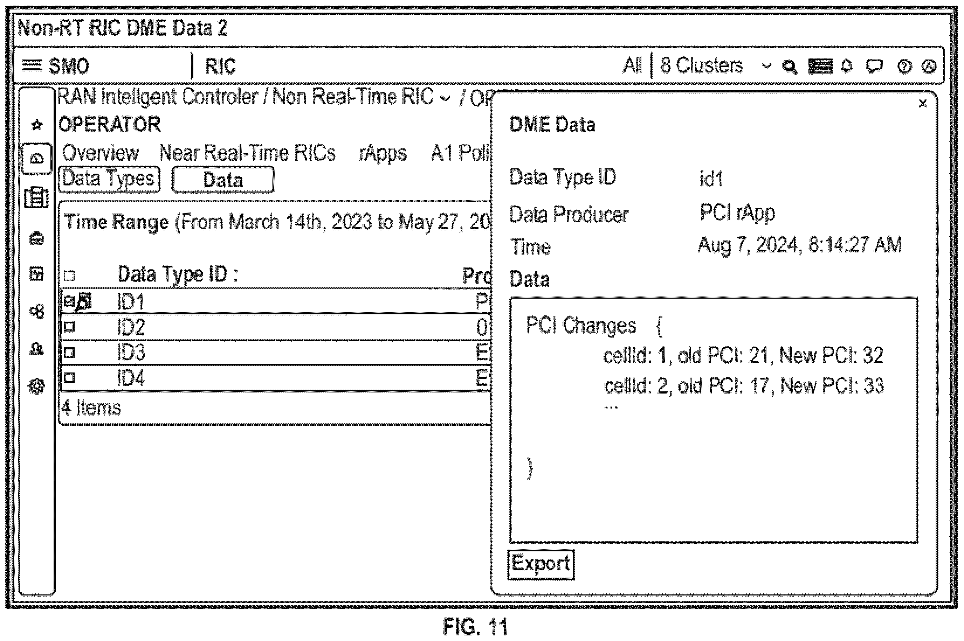

FIG. 11 is a conceptual diagram illustrating yet another example GUI according to one or more aspects of this disclosure. For example, when a user clicks on the selected data type (e.g., ID1), UI 386 may present a pop-up window including the data produced by the selected data producer, in this example, the PCI rApp. As can be seen, in this example, the PCI rApp produced or generated PCI changes to change a PCI for cell ID 1 from 21 to 32 and to change a PCI for cell ID2 from 17 to 33. In the example, where the PCI rApp is running in an open mode, such changes are not automatically made in network 100. Rather, the data is saved in storage device(s) 321 for review by an operator. If the operator so desires, the operator may manually make the changes that were recommended by the PCI rApp. If the PCI rApp was running in a closed-loop mode, non-RT RIC 122 may have acted to automatically make the changes requested by the PCI rApp.

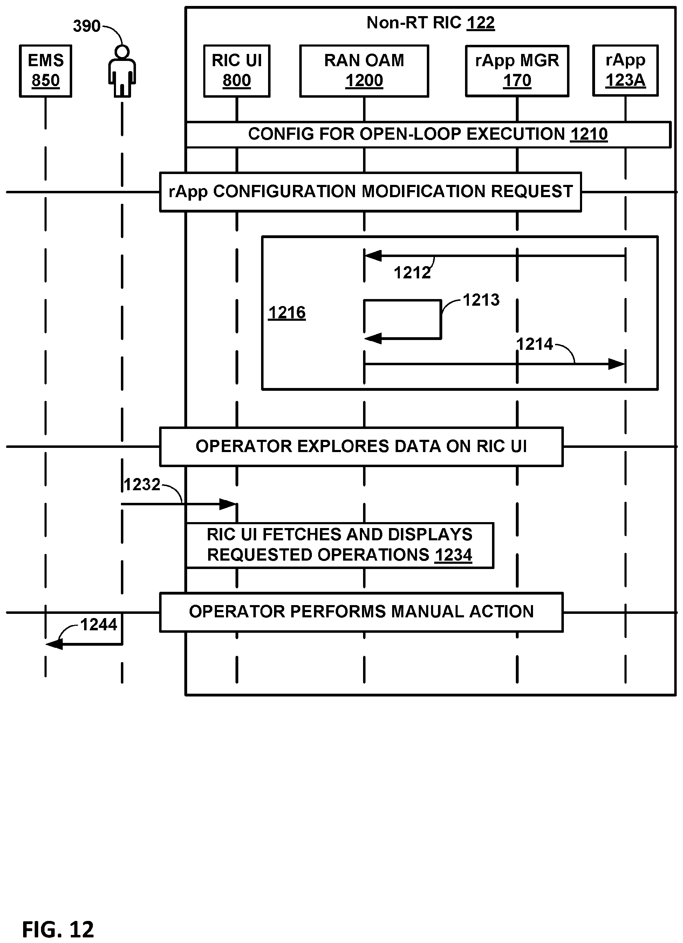

FIG. 12 is a flow diagram illustrating example interception-based open-loop execution for rApps techniques according to one or more aspects of this disclosure. In the example of FIG. 12, a user, such as an operator, or non-RT RIC 122, may configure an r/App (e.g., rApp 123A of FIG. 1) to run in an open-loop manner. rApp 123A may request a configuration modification from non-RT RIC 122. Non-RT RIC 122 may intercept the request. In other words, non-RT RIC 122 may not forward the request on to other elements of network 100. In some examples, non-RT RIC 122 may respond to rApp 123A that the modification request has been intercepted for open-loop execution. This may keep rApp 123A informed as to the state of any requested modifications. Non-RT RIC may store the request in storage device(s) 321 for review by operator 390. Operator 390 may review rApp 123A's requests on UI 386.

Operator 390 may view the recommended action by rApp 123A, for example, via UI 386. In the event that operator 390 desires that the recommended action be performed, operator 390 may manually perform the configuration modification. In this manner, non-RT RIC 122 may facilitate an rApp to operate in an open-loop mode. As used herein, to "perform" an action may be understood as to execute or implement the execution.

An rApp, such as rApp 123Amay be configured to execute in open-loop mode 1210. For example, rApp 123A may request a configuration modification and non-RT RIC 122 may intercept the request, notify rApp 123A that the request was intercepted for open-loop execution and store the operation for display to operator 390 of RIC UI 800 (1216). For example, rApp 123A may send a modify configuration request (1212). RAN OAM 1200 of non-RT RIC 122 may intercept and store the modify configuration request (1213). RAN OAM 1200 may send to rApp 123A a modify configuration response (1214). The modify configuration response may be indicative of the interception of the modify configuration request, thereby notifying rApp 123A that the modify configuration request was intercepted and not implemented.

When rApp 123A has requested configuration modification(s), operator 390 may view such requests via RIC UI 800. For example, operator 390 may enter a command via RIC UI 800 to view intercepted operations (1232). In response to receiving the view intercepted operations command, RIC UI 800 may fetch (e.g., from database 806) and display the intercepted operations (1234).

Operator 390 may perform any manual actions that operator 390 may deem appropriate, for example, based on the data operator 390 viewing of the intercepted operations from RIC UI 800. For example, operator 390 may modify a configuration on EMS 850 (1244) which may correspond to a configuration modification request that was intercepted.

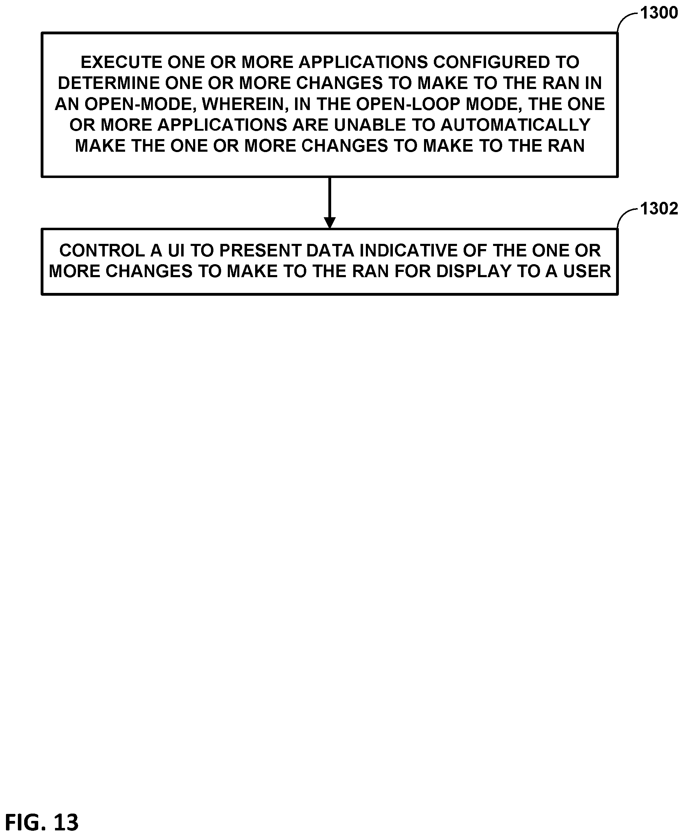

FIG. 13 is a flow diagram illustrating example open-loop executing techniques of a RIC application according to one or more aspects of this disclosure. Non-RT RIC 122 may execute one or more applications configured to determine one or more changes to make to the RAN in an open-loop mode, wherein, in the open-loop mode, the one or more applications are unable to automatically make the one or more changes to make to the RAN (1300). The one or more applications may be one or more RIC applications implemented in software. For example, non-RT RIC 122 may execute rApps 123 in an open-loop mode such that rApps 123 cannot automatically make changes to RAN 109. In some examples, non-RT RIC 122 may be configured to prevent rApps 123, when in the open-loop mode, from automatically making changes to RAN 109.

Non-RT RIC 122 may control a user interface (UI) to present data indicative of the one or more changes to make to the RAN for display to a user (1302). For example, non-RT RIC 122 may cause UI 386 to display to operator 390 data indicative of the one or more changes to make to the RAN. Such display of the data may enable operator 390 to review the data and make an informed decision on whether to implement a change, modify a change and implement the modified change, or to simply reject the change.

In some examples, non-RT RIC 122 may receive, via the UI, a command from the user to at least one of implement a first change of the one or more changes to make to the RAN, reject the first change, or modify the first change. Non-RT RIC 122 may at least one of implement the first change, reject the first change, or modify the first change, based on receiving the command.

In some examples, the one or more applications include an rApp, xApp, cApp, or tApp. In some examples, non-RT RIC 122 may obtain data of a first data type indicative of a first change of the one or more changes to make to the RAN and control the UI to display the data. In some examples, to obtain the data, non-RT RIC 122 may use a data management and exposure (DME) service exposed to a first application of the one or more applications. In some examples, to use the DME service, non-RT RIC 122 may receive, from the first application, a request to register the first data type. Non-RT RIC 122 may execute the DME service to subscribe to the first data type. Non-RT RIC 122 may execute the DME service to receive the data of the first data type from the first application. Non-RT RIC 122 may store the data in the memory for later display via the UI. In some examples, the data includes text. In some examples, the data includes a container including executable code.

In some examples, non-RT RIC 122 may intercept, from a first application of the one or more applications, at least one of an A1 modification operation or an O1 modification operation. For example, an A1 modification operation may include a modification of an A1 service, such as a modification of a policy management service. An O1 modification operation may include a modification of an O1 service, such as a modification of a configuration management or performance management service. In some examples, non-RT RIC 122 may send a notification to the first application that the at least one of the A1 modification operation or the O1 modification operation was intercepted. The data indicative of the one or more changes to make to the RAN may be indicative of the at least one of the A1 modification operation or the O1 modification operation. For example, non-RT RIC 122 may display information indicative of the at least one of the A1 modification operation or the O1 modification operation via the UI.

In some examples, the one or more changes are one or more first changes. In some examples, non-RT RIC 122 may receive, via the UI, a command to change operation of the application from the open-loop mode to a closed-loop mode. Non-RT RIC 122 may change, based on receiving the command, the operation of the software application from the open-loop mode to the closed-loop mode, wherein in the closed-loop mode, the software application is able to automatically make one or more second changes to the RAN.

Thus, from one perspective, there has now been described an example Radio Access Network Intelligent Controller (RIC) for a radio access network (RAN). The RIC includes processor circuitry and memory coupled to the processor circuitry. The memory stores instructions, when executed, to cause the processor circuitry to execute one or more applications configured to determine one or more changes to make to the RAN in an open-loop mode. In the open-loop mode, the one or more applications are unable to automatically make the one or more changes to make to the RAN. The instructions also cause the processor circuitry to control a user interface (UI) to present data indicative of the one or more changes to make to the RAN for display to a user.

The techniques described in this disclosure may be implemented, at least in part, in hardware, software, firmware or any combination thereof. For example, various aspects of the described techniques may be implemented within one or more programmable processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor," "processor circuitry," or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components or integrated within common or separate hardware or software components.

The techniques described in this disclosure may also be embodied or encoded in a computer-readable medium, such as a computer-readable medium, encoding instructions. Instructions embedded or encoded in a computer-readable medium may cause a programmable processor, or other processor, to perform the method, e.g., when the instructions are executed. Computer-readable media may include non-transitory computer-readable storage media and transient communication media. Computer readable storage media, which is tangible and non-transitory, may include random access memory (RAM), read only memory (ROM), programmable read only memory (PROM), erasable programmable read only memory (EPROM), electronically erasable programmable read only memory (EEPROM), flash memory, a hard disk, a compact disc read only memory (CD-ROM), a floppy disk, a cassette, magnetic media, optical media, or other computer-readable storage media. The term "computer-readable storage media" refers to physical storage media, and not signals, carrier waves, or other transient media. More generally, a computer-readable medium can include signals, carrier waves, or other transient media.

Further examples of feature combinations taught by the present disclosure are set out in the following numbered clauses:
1. A Radio Access Network Intelligent Controller (RIC) for a radio access network (RAN), the RIC comprising:
   processor circuitry; and
   one or more memories coupled to the processor circuitry, the one or more memories storing instructions, when executed, to cause the processor circuitry to:
      execute one or more applications configured to determine one or more changes to make to the RAN in an open-loop mode, wherein, in the open-loop mode, the one or more applications are unable to automatically make the one or more changes to make to the RAN; and
      control a user interface (UI) to present data indicative of the one or more changes to make to the RAN for display to a user.
2. The RIC of clause 1, wherein the instructions further cause the processor circuitry to;
   receive, via the UI, a command from the user to at least one of implement a first change of the one or more changes to make to the RAN, reject the first change, or modify the first change; and
   at least one of implement the first change, reject the first change, or modify the first change, based on receiving the command.
3. The RIC of clause 1 or clause 2, wherein the one or more applications comprise an rApp, xApp, cApp, or tApp.
4. The RIC of any preceding clause, wherein to the instructions further cause the processor circuitry to:
   obtain data of a first data type indicative of a first change of the one or more changes to make to the RAN; and
   control the UI to display the data.
5. The RIC of clause 4, wherein to obtain the data, the instructions cause the processor circuitry to use a data management and exposure (DME) service exposed to a first application of the one or more applications.
6. The RIC of clause 5, wherein to use the DME service, the instructions cause the processor circuitry to:
   receive, from the first application, a request to register the first data type;
   execute the DME service to subscribe to the first data type;
   execute the DME service to receive the data of the first data type from the first application; and
   store the data in the one or more memories for later display via the UI.
7. The RIC of any of clauses 4 to 6, wherein the data comprises text.
8. The RIC of any of clauses 4 to 7, wherein the data comprises a container including executable code.
9. The RIC of any preceding clause, wherein the instructions cause the processor circuitry to intercept, from a first application of the one or more applications, at least one of an A1 modification operation or an O1 modification operation.
10. The RIC of clause 9, wherein the instructions further cause the processor circuitry to:
   send a notification to the first application that the at least one of the A1 modification operation or the O1 modification operation was intercepted, wherein the data indicative of the one or more changes to make to the RAN is indicative of the at least one of the A1 modification operation or the O1 modification operation via the UI.
11. The RIC of any preceding clause, wherein the one or more changes are one or more first changes, and wherein the instructions further cause the processor circuitry to:
   receive, via the UI, a command to change operation of the application from the open-loop mode to a closed-loop mode; and
   change, based on receiving the command, the operation of the application from the open-loop mode to the closed-loop mode, wherein in the closed-loop mode, the application is able to automatically make one or more second changes to the RAN.
12. A method comprising:
   executing, by processor circuitry of a Radio Access Network Intelligent Controller (RIC), one or more applications configured to determine one or more changes to make to a radio access network (RAN) in an open-loop mode, wherein, in the open-loop mode, the one or more applications are unable to automatically make the one or more changes to make to the RAN; and
   controlling, by the processor circuitry, a user interface (UI) to present data indicative of the one or more changes to make to the RAN for display to a user.
13. The method of clause 12, further comprising:
   receiving, by the processor circuitry and via the UI, a command from the user to at least one of implement a first change of the one or more changes to make to the RAN, reject the change, or modify the change; and
   at least one of implementing the first change, rejecting the first change, or modifying the first change, based on receiving the command.
14. The method of clause 12 or clause 13, wherein the one or more applications comprise an rApp, xApp, cApp, or tApp.
15. The method of any of clauses 12 to 14, further comprising:
   obtaining, by the processor circuitry, data of a first data type indicative of a first change of the one or more changes to make to the RAN; and
   controlling, by the processor circuitry, the UI to display the data.
16. The method of clause 15, wherein obtaining the data comprises using a data management and exposure (DME) service exposed to a first application of the one or more applications.
17. The method of clause 16, using the DME service comprises:
   receiving, from the first application, a request to register the first data type;
   executing the DME service to subscribe to the first data type;
   executing the DME service to receive the data of the first data type from the first application; and
   storing the data in one or more memories for later display via the UI.
18. The method of any of clauses 15 to 17, wherein the data comprises text.
19. The method of any of clauses 15 to 18, wherein the data comprises a container including executable code.
20. Computer-readable media encoding instructions, which when executed, cause processor circuitry of a Radio Access Network Intelligent Controller (RIC) to:
   execute one or more applications configured to determine one or more changes to make to the RAN in an open-loop mode, wherein, in the open-loop mode, the one or more applications are unable to automatically make the one or more changes to make to the RAN; and
   control a user interface (UI) to present data indicative of the one or more changes to make to the RAN for display to a user.

## Claims

1. A Radio Access Network Intelligent Controller, RIC, for a radio access network, RAN, the RIC comprising:
processor circuitry; and
one or more memories coupled to the processor circuitry, the one or more memories storing instructions, when executed, to cause the processor circuitry to:
execute one or more applications configured to determine one or more changes to make to the RAN in an open-loop mode, wherein, in the open-loop mode, the one or more applications are unable to automatically make the one or more changes to make to the RAN; and
control a user interface, UI, to present data indicative of the one or more changes to make to the RAN for display to a user.

2. The RIC of claim 1, wherein the instructions further cause the processor circuitry to;
receive, via the UI, a command from the user to at least one of implement a first change of the one or more changes to make to the RAN, reject the first change, or modify the first change; and
at least one of implement the first change, reject the first change, or modify the first change, based on receiving the command.

3. The RIC of any of claims 1-2, wherein the one or more applications comprise an rApp, xApp, cApp, or tApp.

4. The RIC of any of claims 1-3, wherein to the instructions further cause the processor circuitry to:
obtain first data of a first data type indicative of a first change of the one or more changes to make to the RAN; and
control the UI to display the first data.

5. The RIC of claim 4, wherein to obtain the first data, the instructions cause the processor circuitry to use a data management and exposure, DME, service exposed to a first application of the one or more applications.

6. The RIC of claim 5, wherein to use the DME service, the instructions cause the processor circuitry to:
receive, from the first application, a request to register the first data type;
execute the DME service to subscribe to the first data type;
execute the DME service to receive the data of the first data type from the first application; and
store the first data in the one or more memories for later display via the UI.

7. The RIC of any of claims 4-6, wherein the data comprises text.

8. The RIC of any of claims 4-6, wherein the data comprises a container including executable code.

9. The RIC of any of claims 1-8, wherein the instructions cause the processor circuitry to intercept, from a first application of the one or more applications, at least one of an A1 modification operation or an O1 modification operation.

10. The RIC of claim 9, wherein the instructions further cause the processor circuitry to:
send a notification to the first application that the at least one of the A1 modification operation or the O1 modification operation was intercepted, wherein the data indicative of the one or more changes to make to the RAN is indicative of the at least one of the A1 modification operation or the O1 modification operation via the UI.

11. The RIC of any of claims 1-10, wherein the one or more changes are one or more first changes, and wherein the instructions further cause the processor circuitry to:
receive, via the UI, a command to change operation of an application from the open-loop mode to a closed-loop mode; and
change, based on receiving the command, the operation of the application from the open-loop mode to the closed-loop mode, wherein in the closed-loop mode, the application is able to automatically make one or more second changes to the RAN.

12. A method comprising:
executing, by processor circuitry of a Radio Access Network Intelligent Controller, RIC, one or more applications configured to determine one or more changes to make to a radio access network, RAN, in an open-loop mode, wherein, in the open-loop mode, the one or more applications are unable to automatically make the one or more changes to make to the RAN; and
controlling, by the processor circuitry, a user interface, UI, to present data indicative of the one or more changes to make to the RAN for display to a user.

13. The method of claim 12, further comprising steps corresponding to the functionality recited in any of claims 2-11.

14. A computer-readable medium comprising instructions that, when executed by one or more programmable processors, cause the one or more programmable processors to perform the method recited by any of claims 12 or 13.
